# EUROPEAN PATENT APPLICATION

(11) **EP 4 212 750 A1**
(43) Date of publication of application: **19.07.2023**
(21) Application number: 21879710.8
(22) Date of filing: 20.07.2021
(51) Int. Cl.: F16C 33/24, B82Y 30/00, B82Y 40/00, C01B 32/15, C01B 32/152, C01B 32/156, C01B 32/158, C01B 32/168, C01B 32/18, C01B 32/182, C01B 32/194, C23C 26/00, H01R 13/03

(54) **STRUCTURE, SLIDING MEMBER, CONNECTOR, AND METHOD FOR MANUFACTURING STRUCTURE**

(30) Priority: 14.10.2020 JP 2020172896
(71) Applicant: Japan Aviation Electronics Industry, Ltd., Tokyo 150-0043 (JP)
(72) Inventor: SATO Kazuomi, Tokyo 150-0043 (JP); TOKUNAGA Kazuhiro, Tokyo 150-0043 (JP); YUZURIHARA Yasuhiro, Tokyo 150-0043 (JP); KOSAKA Mayumi, Tokyo 108-8001 (JP); YUGE Ryota, Tokyo 108-8001 (JP)
(74) Representative: Opilex
(86) International application number: PCT/JP2021/027145
(87) International publication number: WO 2022/079968

(57) **Abstract**

An object of the present invention is to provide a structure, a sliding member and a connector, having a surface (sliding surface) that is excellent in abrasion resistance and can keep contact resistance low for a long period, and a method for producing the structure. The object is attained by a structure having a configuration where a nanocarbon material is disposed on an at least partial surface of a metal, a sliding member and a connector, having the configuration, and a method for producing the structure. In the structure, it is preferred that a coating containing the nanocarbon material and an organic compound having at least a first functional group having affinity for the metal and a second functional group having affinity for the nanocarbon material should be disposed on the at least partial surface of the metal.

## Description

### Technical Field

The present invention relates to a structure, a sliding member, a connector, and a method for producing a structure.

### Background Art

The plating of a sliding surface with a metal such as silver is known as means for reducing the contact resistance of a structure having a sliding surface, and improving slidability. However, plating with a metal including silver, a relatively soft metal, is susceptible to abrasion. Therefore, various techniques have been developed which involve further surface-treating metal plating, thereby improving abrasion resistance and keeping the contact resistance of a sliding surface low.

Patent Literature 1 discloses a technique of forming a coating layer consisting of a silver layer and a film at a junction configured to come into electrical contact with other conductive members, the film being formed by bringing the silver layer into contact with a solution containing thiol and benzotriazole.

### Citation List

### Patent Literature

Patent Literature 1: Japanese Patent No. 5464284

### Summary of Invention

### Technical Problem

The technique described in Patent Literature 1, however, is required to form a coating layer with a certain thickness for improving abrasion resistance. This may elevate the contact resistance of a sliding surface.

Object of the present invention is to provide a structure, a sliding member and a connector, having a surface (sliding surface) that is excellent in abrasion resistance and can keep contact resistance low for a long period, and a method for producing the structure.

### Solution to Problem

The present invention provides a structure, a sliding member, a connector, and a method for producing a structure, which have the following configurations [1] to [18].
[1] A structure having a configuration where a nanocarbon material is disposed on an at least partial surface of a metal.
[2] The structure according to [1], in which the nanocarbon material is at least one of a carbon nanotube, a carbon nanohorn aggregate, graphene, and fullerene.
[3] The structure according to [2], in which the nanocarbon material is a carbon nanohorn aggregate.
[4] The structure according to any of [1] to [3], in which a coating containing the nanocarbon material and an organic compound having at least a first functional group having affinity for the metal and a second functional group having affinity for the nanocarbon material is disposed on the at least partial surface of the metal.
[5] The structure according to [4], in which the first functional group is a thiol group.
[6] The structure according to [4] or [5], in which the second functional group is an amide group, a hydroxy group or a carboxy group.
[7] The structure according to [6], in which the second functional group is an amide group.
[8] The structure according to any of [4] to [7], in which the organic compound has at least one of a chain saturated hydrocarbon group, a chain unsaturated hydrocarbon group, a cyclic saturated hydrocarbon group and a cyclic unsaturated hydrocarbon group on a main chain backbone (main chain skeleton).
[9] The structure according to [8], in which the organic compound has a chain saturated hydrocarbon group on the main chain backbone.
[10] The structure according to any of [1] to [9], in which the nanocarbon material is modified with a third functional group.
[11] The structure according to any of [1] to [10], in which the nanocarbon material is modified with a thiol group.
[12] The structure according to any of [1] to [11], in which the metal is at least one of gold, silver, and alloy thereof, and plating thereof.
[13] A structure having a configuration where an at least partial surface of a metal is coated with a nanocarbon material having a functional group having affinity for the metal.
[14] A structure having a configuration where a metal and a nanocarbon material are disposed via an organic compound having a first functional group having affinity for the metal and a second functional group having affinity for the nanocarbon material.
[15] A sliding member having a configuration according to any of [1] to [14] on at least a part of a sliding surface.
[16] A connector having a configuration according to any of [1] to [14] on at least a part of a sliding surface.
[17] A method for producing a structure, including the step of coating an at least partial surface of a metal with a nanocarbon material.
[18] A method for producing a structure, including the step of coating an at least partial surface of a metal with a material containing a nanocarbon material and an organic compound having at least a first functional group having affinity for the metal and a second functional group having affinity for the nanocarbon material.

### Advantageous Effects of Invention

The present invention can provide a structure, a sliding member and a connector, having a surface (sliding surface) that is excellent in abrasion resistance and can keep contact resistance low for a long period, and a method for producing the structure.

### Brief Description of the Drawings

[Fig. 1] Fig. 1 is a diagram for illustrating an apparatus for use in a demonstration experiment.
[Fig. 2] Fig. 2 is a graph showing changes in coefficient of friction of a plate surface against the number of slides in example 15.
[Fig. 3] Fig. 3 is a graph showing changes in coefficient of friction of a plate surface against the number of slides in example 1.
[Fig. 4] Fig. 4 is a graph showing changes in coefficient of friction of a plate surface against the number of slides in example 3.
[Fig. 5] Fig. 5 is a graph showing changes in coefficient of friction of a plate surface against the number of slides in example 4.
[Fig. 6] Fig. 6 is a graph showing changes in contact resistance of a plate surface against the number of slides in example 15.
[Fig. 7] Fig. 7 is a graph showing changes in contact resistance of a plate surface against the number of slides in example 4.

### Description of Embodiments

As mentioned above, a sliding surface is subjected to metal plating such as soft silver plating in order to reduce the contact resistance of a structure having a sliding surface, and improve slidability. However, the metal plating such as soft silver plating is soft, though having low contact resistance, and is therefore susceptible to abrasion due to contact with other members (e.g., by slide). The abrasion of plating may expose a raw material portion of a structure and elevate contact resistance and a coefficient of friction. For this reason, it is possible to use hard silver plating or the like in which plating is hardened. Such metal plating, however, facilitates elevating contact resistance due to reduction in conductivity of a coating by a contained hardener, or decrease in contact area by a hard surface. Furthermore, it is also assumed that a lubricant in an oil state, for example, would be applied to a metal-plated surface. However, this may cause stickiness of the surface, an increased number of production steps, and complicated management. Depending on the type of the lubricant used, its concentration or dispersion state in a coating liquid may need to be managed due to low dispersibility.

On the other hand, the structure of the present invention prevents other members from coming into direct contact with a metal surface, even in the case of repetitive contact of other members, and can improve abrasion resistance, because a nanocarbon material is applied to at least a part of the metal surface. Furthermore, the structure of the present invention can maintain a state where contact resistance is kept low, also eliminates the need of a hardener, a lubricant, or complicated management, is free from surface stickiness, and has favorable handleability and excellent productivity, because the nanocarbon material has excellent conductivity, dispersibility, lubricity and moderate hardness.

In the structure of the present invention, an organic compound having specific functional groups is attached, together with the nanocarbon material, to at least a part of the metal surface so that the bond between the nanocarbon material and the metal surface can be stronger (e.g., by chemical adsorption) via this compound. This can more improve abrasion resistance against repetitive contact of other members. Furthermore, the aforementioned properties of the nanocarbon material can facilitate keeping contact resistance low for a long period.

Hereinafter, the present invention will be described in detail. In the description below, the term "to" which indicates a numeric range is meant to include numeric values described before and after the term as the lower limit and upper limit values.

### <Structure>

The structure of the present invention has a configuration where a nanocarbon material is disposed on an at least partial surface of a metal. Thus, at least a part of the surface of the structure includes a metal, and at least a part of the metal surface is coated with a nanocarbon material. In the structure of the present invention, it is preferred that a coating containing the nanocarbon material and an organic compound having at least a first functional group having affinity for the metal and a second functional group having affinity for the nanocarbon material (hereinafter, this organic compound will also be referred to as a first compound) should be disposed on the at least partial surface of the metal, from the viewpoint of improving abrasion resistance and keeping contact resistance low.

In this context, it is desirable for obtaining the advantageous effects of the present invention that the rate of coating (Coated area / Total area of the metal surface (of a portion serving as a sliding surface) × 100 (%)) of the metal surface of the structure with the nanocarbon material or the coating containing the first compound and the nanocarbon material should be closer to 100%. In the structure of the present invention, the rate of coating is preferably at least 5% or more, more preferably 20% or more, further preferably 40% or more, particularly preferably 50% or more, from the viewpoint of the maintenance of abrasion resistance and contact resistance. The rate of coating can be confirmed under a scanning electron microscope (SEM).

The amount of the nanocarbon material used can be appropriately changed depending on the total area of the metal surface of the structure to be coated. In the case of using the nanocarbon material and the first compound in combination, the blending ratio therebetween (mass of the nanocarbon material:mass of the first compound) can be appropriately set. However, the blending ratio is preferably 1:10 to 10:1, more preferably 1:5 to 5:1, further preferably 1:3 to 3:1, particularly preferably 1:2 to 2:1, from the viewpoint of a stronger bond between nanocarbon material and the metal surface.

The thickness of the nanocarbon material or the coating including the nanocarbon material and the first compound on the metal surface is not particularly limited. The metal surface coated therewith even slightly can improve abrasion resistance and can keep contact resistance low. The coating thickness is preferably 10 nm or larger and 1 µm or smaller, more preferably 10 nm or larger and 500 nm or smaller, from the viewpoint of controlling elevation in contact resistance.

Hereinafter, a configuration where the nanocarbon material is applied to the metal surface (without the first compound) and a structure having the configuration will be referred to as a first configuration and a first structure, respectively. Hereinafter, a configuration where the coating containing the nanocarbon material and the first compound is applied to the metal surface and a structure having the configuration will be referred to as a second configuration and a second structure, respectively. The structure of the present invention has any one or both of the first configuration and the second configuration.

In this context, the structure is not particularly limited by its specific purpose as long as the structure is an object having a surface (sliding surface) that comes into (repetitive) contact with other members. Examples of the structure can include members required to have abrasion resistance and low contact resistance when used, i.e., electronic components (machinery devices) such as connectors, switches and relays, and automobile sliding members such as cylinders and pistons, which have a surface having a portion (contact part) that comes into contact with other members (e.g., by slide). For example, when the structure is a connector pair in which a male terminal is inserted to a female terminal so that both the terminals come into contact and mate with each other, it is preferred that at least one of the first configuration and the second configuration mentioned above should be present on the surface of at least one of the contact parts of the male terminal and the female terminal. In the present invention, the nanocarbon material attached to at least a part of the surfaces of these contact parts can inhibit the contact between metals (e.g., silver or gold) constituting the respective contact parts, and can control the adhesion of the metals. Hence, while the abrasion of each contact part surface is prevented, low and stable contact resistance and coefficient of friction can be maintained owing to the conductivity and lubricity of the nanocarbon material. Since the coefficient of friction can thus be kept low, an electronic component, when used (or inserted or removed in the case of a connector), can be easily operated (or inserted or removed in the case of a connector).

### (Metal)

In this context, the metal includes various metals such as gold (Au), silver (Ag), copper (Cu), platinum (Pt), zinc (Zn), tin (Sn), iron (Fe), nickel (Ni), chromium (Cr), palladium (Pd), rhodium (Rh), ruthenium (Ru), osmium (Os), iridium (Ir) and indium (In), alloy of these metals, and plating of these metals. Among them, the metal is preferably at least one of gold, silver, and alloy thereof, and plating thereof from the viewpoint of the maintenance of contact resistance and improvement in abrasion resistance. The metal is more preferably at least one of silver and silver alloy, and plating therewith from the viewpoint of reducing the contact resistance of the sliding surface.

Thus, one type of the metal may be used alone, or a plurality thereof may be used in combination.

A sliding member such as an electric or electronic component is required to keep contact resistance low and also to have heat resistance, depending on a usage environment. For a connector, it is also desirable to be a material that reduces a load upon connection of the connector, i.e., an insertion force. From such a viewpoint as well, the metal, the alloy or the plating mentioned above can be preferably used.

In the structure of the present invention, a functional group may be introduced to the metal surface. This functional group can be appropriately set depending on the nanocarbon material or the first compound used, and is preferably a group having affinity therefor. Specifically, in the case of the first structure, the functional group to be introduced to the metal surface is preferably an amide group (-C(=O)NR¹R²: R¹ and R² each independently represent -H or an alkyl group), a hydroxy group (-OH), a carboxy group (-COOH), a carbonyl group (-C(=O)-), an amino group (-NH₂), a sulfo group (-SO₃H), a ferrocenyl group, or the like which has affinity for the nanocarbon material. In the case of the second structure, these groups or a group having affinity for the first compound (specifically, the first functional group and the second functional group of the first compound) is preferred. Examples thereof can include -C(=O)NR¹R², -OH, a sulfuric acid ester group (-OSO₃H), -COOH, -C(=O)-, -NH₂, -SO₃H, a ferrocenyl group, and a phosphoric acid ester group (-OPO(OH)₃).

### (Nanocarbon material)

The nanocarbon material mainly includes a carbon atom (carbon) and is a material whose one-dimensional shape is formed in a nano scale (e.g., 100 nm or smaller in diameter). The nanocarbon material includes, for example, particles that are made of a carbon atom and are of 100 nm or smaller in diameter (nanocarbon particles), and includes the following:
a carbon nanotube, a carbon nanohorn aggregate, graphene, fullerene, carbon nanofiber, carbon black, and the like.

Among them, at least one of graphene, fullerene, a carbon nanotube and a carbon nanohorn aggregate is preferably used as the nanocarbon material from the viewpoint of improvement in abrasion resistance. A carbon nanohorn aggregate is more preferably used as the nanocarbon material from the viewpoint of the maintenance of contact resistance and improvement in abrasion resistance.

The nanocarbon material may include only a carbon atom or may have a surface functional group (third functional group) including an additional atom by surface treatment such as oxidation treatment. This surface functional group is not particularly limited and can be appropriately set depending on the metal of the surface (sliding surface) or the first compound in the structure. It is preferred to introduce a surface functional group having affinity for the metal or the first compound to the nanocarbon material. Examples of the surface functional group include an amino group (-NH₂), a hydroxy group (-OH), a carbonyl group (-C(=O)-), a carboxy group (-COOH), a methoxy group (-OCH₃), an amide group (-C(=O)NR¹R²: R¹ and R² each independently represent -H or an alkyl group), a methyl group (-CH₃), a thiol group (-SH), a sulfo group (-SO₃H), and a dithiocarbamate group (-NRC(=S)SH; R represents -H or an alkyl group).

For example, in the case of using a metal such as gold or silver, alloy or plating thereof as the metal, it is preferred that the nanocarbon material should have a group containing a sulfur atom having affinity for the metal as the surface functional group, from the viewpoint of affinity for the metal. Examples of the group containing a sulfur atom include a thiol group, a sulfo group, and a dithiocarbamate group. It is more preferred that the nanocarbon material should be modified with a thiol group, from the viewpoint of the ease of production.

Thus, it is preferred that the structure of the present invention (particularly, the first structure) should have a configuration where an at least partial surface of a metal is coated with a nanocarbon material having a functional group having affinity for the metal. In the case of the second structure, a functional group having affinity for the first compound (particularly, the first functional group or the second functional group) may be introduced, together with the functional group having affinity for the metal or alone, to the surface of the nanocarbon material.

One nanocarbon material may be used alone, or a plurality of nanocarbon materials may be used in combination. For example, a mixture of these nanocarbon materials may be used. The shape (e.g., aspect ratio) of the nanocarbon material used is not particularly limited, and various shapes can be appropriately used.

In this context, the graphene is one of the allotropes of carbon, consisting of a single layer of carbon atoms, and is a sheet-like substance that is 1 atom thick (approximately 0.35 nm) in which the carbon atoms are arranged in a hexagonal honeycomb lattice pattern.

The fullerene is a generic name for molecules including a large number of carbon atoms so as to form a closed -shell hollow. Examples thereof include C₆₀ fullerene which includes 60 carbon atoms in a ball shape of graphene sheets.

The carbon nanotube is a substance in which a graphene sheet including carbon atoms is in a single-layer or multilayer tubular form (tube). A single-layer carbon nanotube or a two-layer or more multilayer carbon nanotube can be used as the carbon nanotube. Among them, a multilayer carbon nanotube (particularly, having 3 or more layers) is preferably used as the carbon nanotube from the viewpoint of cost reduction.

In this context, the carbon nanohorn aggregate includes carbon nanohorns (CNHs) and a fibrous carbon nanohorn aggregate.

The carbon nanohorns (CNHs) are an aggregate in which single-layer carbon nanohorns in a conical shape having a structure of a wrapped graphene sheet with a distal end pointed in a horn shape with a distal end angle of approximately 20° assemble radially such that the distal end parts in a conical shape face outward. The diameter is on the order of 100 nm, and the shape is a spherical shape.

The carbon nanohorns (CNHs) have at least one type of assembling structure among a seed-shaped assembling structure, a bud-shaped assembling structure, a dahlia-shaped assembling structure, a petal-shaped (which is a structure of several graphene sheets) assembling structure, and a petal/dahlia-shaped (which is a mixed state of petals and dahlias) assembling structure. The seed shape is a shape where few or no horn-like protrusions are found on a spherical surface. The bud shape is a shape where some horn-like protrusions are found on a spherical surface. The dahlia shape is a shape where a large number of horn-like protrusions are found on a spherical surface. The petal shape is a shape where petal-like protrusions are found on a spherical surface. The petal/dahlia shape is an intermediate structure of the dahlia shape and the petal shape.

The fibrous carbon nanohorn aggregate is an aggregate in which a plurality of single-layer carbon nanohorns assemble in a fibrous form. The fibrous carbon nanohorn aggregate is formed from carbon nanohorns of at least one type among the assembling structures described above.

All of these carbon nanohorn aggregates have high conductivity because single-layer carbon nanohorns are partially bonded through chemical bonds.

### (Organic compound (first compound))

The first compound has at least the first functional group and the second functional group. The first functional group and the second functional group can be appropriately set depending on the metal constituting at least a part of the surface of the structure, and the nanocarbon material used. The first functional group and the second functional group may be the same or may be different. The first compound may have one or more groups as the first functional group and may have one or more groups as the second functional group. In short, the first compound may have one type of functional group (the same first functional group and second functional group) or may have a plurality of types of functional groups. The first compound may have an additional functional group other than the first functional group and the second functional group within a range that allows the advantageous effects of the present invention to be obtained.

A functional group having affinity for the metal of the surface of the structure is used as the first functional group, and the first compound may or may not be chemically adsorbed to the metal via the first functional group. The first functional group can be appropriately selected depending on the metal constituting the surface of the structure, and is not particularly limited. For example, in the case of using gold, silver, or alloy thereof, or plating thereof as the metal, it is preferred to use a functional group containing a sulfur atom as the first functional group, from the viewpoint of affinity for the metal. Examples of the functional group containing a sulfur atom can include a thiol group (-SH), a sulfo group (-SO₃H), and a dithiocarbamate group (-NRC(=S)SH; R represents -H or an alkyl group). Among them, a thiol group is preferably used as the first functional group from the viewpoint of handleability, easy availability, etc. As for other metals, the advantageous effects of the present invention can be readily obtained by using a functional group having affinity for each metal as the first functional group.

A functional group having affinity for the nanocarbon material used is used as the second functional group, and the first compound may or may not be chemically adsorbed to the nanocarbon material via the second functional group. The second functional group can be appropriately selected depending on the nanocarbon material used, and is not particularly limited. At least one of a hydroxy group (-OH), a carboxy group (-COOH), a carbonyl group (-C(=O)-), an amide group (-C(=O)NR³R⁴), an amino group (-NH₂), a sulfo group (-SO₃H), and a ferrocenyl group is preferred from the viewpoint of affinity for the nanocarbon material. From a similar viewpoint, the second functional group is more preferably an amide group, a hydroxy group or a carboxy group, further preferably an amide group. Provided that the second functional group is an amide group, the treatment time (e.g., the time for which a treatment object (coating object) is dipped in a treatment liquid) of a treatment object with a treatment liquid (material containing the nanocarbon material and the first compound) is shortened and productivity can be further improved.

In the case of using a carbon nanohorn aggregate or a carbon nanotube as the nanocarbon material, the effects brought about by this second functional group can be more markedly obtained. In this context, R³ and R⁴ in the amide group each independently represent -H or an alkyl group having 1 to 6 carbon atoms and optionally having a double bond. It is preferred that at least one of R³ and R⁴ should be -H, and it is more preferred that both R³ and R⁴ should be -H, from the viewpoint of affinity for the nanocarbon material.

Thus, it is preferred that the structure of the present invention should have a configuration where a metal and a nanocarbon material are disposed via a first compound having a first functional group having affinity for the metal and a second functional group having affinity for the nanocarbon material.

The first compound preferably has at least one of a chain saturated hydrocarbon group, a chain unsaturated hydrocarbon group, a cyclic saturated hydrocarbon group and a cyclic unsaturated hydrocarbon group on a main chain backbone, and may have a plurality of such groups. Among them, the first compound more preferably has a chain saturated hydrocarbon group on a main chain backbone, from the viewpoint of keeping contact resistance low.

The main chain backbone refers to a moiety that corresponds to a trunk with the maximum number of carbon atoms in the first compound. The first compound may have one or more side chains in addition to the main chain, or may have no side chain. The number of carbon atoms in the side chain can be, for example, 1 to 6.

The chain saturated hydrocarbon group may be a linear saturated hydrocarbon group or may be a branched saturated hydrocarbon group, and is preferably a linear saturated hydrocarbon group from the viewpoint of keeping contact resistance low. The (total) number of carbon atoms in the chain saturated hydrocarbon group is preferably 2 to 30, more preferably 2 to 20, further preferably 4 to 16, particularly preferably 5 to 16, from the viewpoint of keeping contact resistance low. In the case of the branched saturated hydrocarbon group, the number of carbon atoms in the branched (side chain) moiety can be, for example, 1 to 6. Specifically, the branched saturated hydrocarbon group can have a methyl group, an ethyl group, a propyl group, a butyl group, a pentyl group, or a hexyl group as a branched chain. The position and the number of the branched chain are not particularly limited, and the branched chain may be present at any position.

Specific examples of the chain saturated hydrocarbon group include, but are not limited to, those given below. Although a methyl group is taken as an example of the branched chain here, other groups (e.g., an ethyl group, a propyl group, and a butyl group) may be used. In the examples given below, a chain saturated hydrocarbon group having 2 to 12 carbon atoms is taken as an example, though the chain saturated hydrocarbon group is not limited thereto. One of the two bonds "-" carried by each chain saturated hydrocarbon group given below is a bond on the first functional group side, and the other bond is a bond on the second functional group side. Such a bond may be attached directly to the first functional group or the second functional group or may be attached to the first functional group or the second functional group via an additional group (e.g., a chain unsaturated hydrocarbon group, a cyclic saturated hydrocarbon group, or a cyclic unsaturated hydrocarbon group). Although a form in which the first functional group and the second functional group are bonded to both ends of the main chain is described here, these functional groups may be bonded to a branched chain.

-CH₂CH₂-, -CH₂CH₂CH₂-, -CH(CH₃)CH₂-, -CH₂CH(CH₃)-, - CH₂CH₂CH₂CH₂-, -CH₂CH₂CH(CH₃)-, -CH₂CH(CH₃)CH₂-, -CH(CH₃)CH(CH₃)-, - CH₂CH₂CH₂CH₂CH₂-, -CH₂CH₂CH₂CH(CH₃)-, -CH₂CH₂CH(CH₃)CH₂-, - CH₂CH(CH₃)CH₂CH₂-, -CH₂CH(CH₃)CH(CH₃)-, -CH₂CH₂CH₂CH₂CH₂CH₂-, - CH₂CH₂CH₂CH₂CH(CH₃)-, -CH₂CH₂CH₂CH(CH₃)CH₂-, - CH₂CH₂CH(CH₃)CH₂CH₂-, -CH₂CH₂CH(CH₃)CH(CH₃)-, - CH(CH₃)CH(CH₃)CH(CH₃)-, -CH₂CH₂CH₂CH₂CH₂CH₂CH₂-, - CH₂CH₂CH₂CH₂CH₂CH(CH₃)-, -CH₂CH₂CH₂CH₂CH(CH₃)CH₂-, - CH₂CH₂CH₂CH(CH₃)CH₂CH₂-, -CH₂CH₂CH(CH₃)CH₂CH₂CH₂-, - CH₂CH₂CH₂CH(CH₃)CH(CH₃)-, -CH₂CH(CH₃)CH(CH₃)CH(CH₃)-, - CH(CH₃)CH₂CH₂CH₂CH(CH₃)-, -CH₂CH₂(CH₃)CH₂CH₂CH(CH₃)-, - CH₂CH₂CH₂CH₂CH₂CH₂CH₂CH₂-, -CH₂CH₂CH₂CH₂CH₂CH₂CH(CH₃)-, - CH₂CH₂CH₂CH₂CH₂CH(CH₃)CH₂-,-CH₂CH₂CH₂CH₂CH(CH₃)CH₂CH₂-, - CH₂CH₂CH₂CH(CH₃)CH₂CH₂CH₂-, -CH₂CH₂CH₂CH₂CH(CH₃)CH(CH₃)-, - CH₂CH₂CH(CH₃)CH(CH₃)CH(CH₃)-, -CH(CH₃)CH(CH₃)CH(CH₃)CH(CH₃)-, - CH₂CH₂CH₂CH(CH₃)CH₂CH(CH₃)-, -CH(CH₃)CH₂CH(CH₃)CH₂CH(CH₃)-, - CH₂CH₂CH₂CH₂CH₂CH₂CH₂CH₂CH₂-, -CH₂CH₂CH₂CH₂CH₂CH₂CH₂CH(CH₃)-, - CH₂CH₂CH₂CH₂CH₂CH₂CH(CH₃)CH₂-, -CH₂CH₂CH₂CH₂CH₂CH(CH₃)CH₂CH₂-, - CH₂CH₂CH₂CH₂CH(CH₃)CH₂CH₂CH₂-, -CH₂CH₂CH₂CH(CH₃)CH₂CH₂CH₂CH₂-, - CH₂CH₂CH₂CH₂CH₂CH(CH₃)CH(CH₃)-, -CH₂CH₂CH₂CH(CH₃)CH(CH₃)CH(CH₃)-, -CH₂CH(CH₃)CH(CH₃)CH(CH₃)CH(CH₃)-, - CH₂CH₂CH₂CH₂CH(CH₃)CH₂CH(CH₃)-, -CH₂CH(CH₃)CH₂CH(CH₃)CH₂CH(CH₃)-, -CH₂CH₂CH₂CH₂CH₂CH₂CH₂CH₂CH₂CH₂-, - CH₂CH₂CH₂CH₂CH₂CH₂CH₂CH₂CH(CH₃)-, - CH₂CH₂CH₂CH₂CH₂CH₂CH₂CH(CH₃)CH₂-, - CH₂CH₂CH₂CH₂CH₂CH₂CH(CH₃)CH₂CH₂-, - CH₂CH₂CH₂CH₂CH₂CH(CH₃)CH₂CH₂CH₂-, - CH₂CH₂CH₂CH₂CH₂(CH₃)CH₂CH₂CH₂CH₂-, - CH₂CH₂CH₂CH₂CH₂CH(CH₃)CH₂CH(CH₃)-, - CH₂CH₂CH₂CH(CH₃)CH(CH₃)CH₂CH(CH₃)-, - CH₂CH(CH₃)CH(CH₃)CH(CH₃)CH₂CH(CH₃)-, - CH₂CH₂CH₂CH₂CH₂CH(CH₃)CH₂CH(CH₃)-, - CH₂CH₂CH(CH₃)CH₂CH(CH₃)CH₂CH(CH₃)-, - CH(CH₃)CH(CH₃)CH₂CH(CH₃)CH₂CH(CH₃)-, - CH₂CH₂CH₂CH₂CH₂CH₂CH₂CH₂CH₂CH₂CH₂-, - CH₂CH₂CH₂CH₂CH₂CH₂CH₂CH₂CH₂CH(CH₃)-, - CH₂CH₂CH₂CH₂CH₂CH₂CH₂CH₂CH(CH₃)CH₂-, - CH₂CH₂CH₂CH₂CH₂CH₂CH₂CH(CH₃)CH₂CH₂-, - CH₂CH₂CH₂CH₂CH₂CH₂CH(CH₃)CH₂CH₂CH₂-, - CH₂CH₂CH₂CH₂CH₂CH(CH₃)CH₂CH₂CH₂CH₂-, - CH₂CH₂CH₂CH₂CH(CH₃)CH₂CH₂CH₂CH₂CH₂-, - CH₂CH₂CH₂CH₂CH₂CH₂CH₂CH(CH₃)CH(CH₃)-, - CH₂CH₂CH₂CH₂CH₂CH(CH₃)CH(CH₃)CH(CH₃)-, - CH₂CH₂CH₂CH(CH₃)CH(CH₃)CH(CH₃)CH(CH₃)-, - CH₂CH(CH₃)CH(CH₃)CH(CH₃)CH(CH₃)CH(CH₃)-, - CH₂CH₂CH₂CH₂CH₂CH₂CH(CH₃)CH₂CH(CH₃)-, - CH₂CH₂CH₂CH(CH₃)CH₂CH(CH₃)CH₂CH(CH₃)-, - CH(CH₃)CH₂CH(CH₃)CH₂CH(CH₃)CH₂CH(CH₃)-, - CH₂CH₂CH₂CH₂CH₂CH(CH₃)CH₂CH₂CH(CH₃)-, - CH₂CH(CH₃)CH₂CH₂CH(CH₃)CH₂CH₂CH(CH₃)-, - CH₂CH₂CH₂CH₂CH₂CH₂CH₂CH₂CH₂CH₂CH₂CH₂-, - CH₂CH₂CH₂CH₂CH₂CH₂CH₂CH₂CH₂CH₂CH(CH₃)-, - CH₂CH₂CH₂CH₂CH₂CH₂CH₂CH₂CH₂CH(CH₃)CH₂-, - CH₂CH₂CH₂CH₂CH₂CH₂CH₂CH₂CH(CH₃)CH₂CH₂-, - CH₂CH₂CH₂CH₂CH₂CH₂CH₂CH(CH₃)CH₂CH₂CH₂-, - CH₂CH₂CH₂CH₂CH₂CH₂CH(CH₃)CH₂CH₂CH₂CH₂-, - CH₂CH₂CH₂CH₂CH₂CH(CH₃)CH₂CH₂CH₂CH₂CH₂-, - CH₂CH₂CH₂CH₂CH₂CH₂CH₂CH₂CH(CH₃)CH(CH₃)-, - CH₂CH₂CH₂CH₂CH₂CH₂CH₂CH₂CH(CH₃)CH(CH₃)-, - CH₂CH₂CH₂CH₂CH₂CH₂CH(CH₃)CH(CH₃)CH(CH₃)-, - CH₂CH₂CH₂CH₂CH(CH₃)CH(CH₃)CH(CH₃)CH(CH₃)-, - CH₂CH₂CH(CH₃)CH(CH₃)CH(CH₃)CH(CH₃)CH(CH₃)-, - CH(CH₃)CH(CH₃)CH(CH₃)CH(CH₃)CH(CH₃)CH(CH₃)-, - CH₂CH₂CH₂CH₂CH₂CH₂CH₂CH(CH₃)CH₂CH(CH₃)-, - CH₂CH₂CH₂CH₂CH(CH₃)CH₂CH(CH₃)CH₂CH(CH₃)-, - CH₂CH(CH₃)(CH₃)CH₂CH(CH₃)CH₂CH(CH₃)CH₂CH(CH₃)-, - CH₂CH₂CH₂CH₂CH₂CH₂CH(CH₃)CH₂CH₂CH(CH₃)-, - CH₂CH₂CH(CH₃)CH₂CH₂CH(CH₃)CH₂CH₂CH(CH₃)-.

The chain unsaturated hydrocarbon group may have one unsaturated bond (double bond or triple bond) or may have two or more unsaturated bonds, and the number or position of the unsaturated bond is not particularly limited. The (total) number of carbon atoms in the chain unsaturated hydrocarbon group is preferably 2 to 30, more preferably 2 to 20, further preferably 4 to 16, particularly preferably 5 to 16, from the viewpoint of keeping contact resistance low. The chain unsaturated hydrocarbon group may be a linear unsaturated hydrocarbon group or may be a branched unsaturated hydrocarbon group, and is preferably a linear unsaturated hydrocarbon group from the viewpoint of keeping contact resistance low. In the case of the branched unsaturated hydrocarbon group, the number of carbon atoms in the branched (side chain) moiety can be, for example, 1 to 6. Specifically, the branched unsaturated hydrocarbon group can have a methyl group, an ethyl group, a propyl group, a butyl group, a pentyl group, or a hexyl group as a branched chain. The position and the number of the branched chain are not particularly limited, and the branched chain may be present at any position.

Specific examples of the chain unsaturated hydrocarbon group include, but are not limited to, those given below. Although a methyl group is taken as an example of the branched chain here, other groups (e.g., an ethyl group, a propyl group, and a butyl group) may be used. In the examples given below, a chain unsaturated hydrocarbon group having 2 to 12 carbon atoms and having one double bond as an unsaturated bond (having one branched chain when having a branched chain) is taken as an example, though the chain unsaturated hydrocarbon group is not limited thereto. One of the two bonds "-" carried by each chain unsaturated hydrocarbon group given below is a bond on the first functional group side, and the other bond is a bond on the second functional group side. Such a bond may be attached directly to the first functional group or the second functional group or may be attached to the first functional group or the second functional group via an additional group (e.g., a chain saturated hydrocarbon group, a cyclic saturated hydrocarbon group, or a cyclic unsaturated hydrocarbon group). Although a form in which the first functional group and the second functional group are bonded to both ends of the main chain is described here, these functional groups may be bonded to a branched chain.

-CH=CH-, -CH=CHCH₂-, -C(CH₃)=CH-, -CH=C(CH₃)-, - CH=CHCH₂CH₂-, -CH₂CH=CHCH₂-, -CH=CHCH(CH₃)-, -CH₂CH=C(CH₃)-, - CH=C(CH₃)CH₂-, -CH=CHCH₂CH₂CH₂-, -CH₂CH=CHCH₂CH₂-, - CH₂CH₂CH=CHCH₂-, -CH=CHCH₂CH(CH₃)-, -CH₂CH=CHCH(CH₃)-, - CH₂CH₂CH=C(CH₃)-, -CH=CHCH(CH₃)CH₂-, -CH₂CH=C(CH₃)CH₂-, - CH=C(CH₃)CH₂CH₂-, -CH=CHCH₂CH₂CH₂CH₂-, -CH₂CH=CHCH₂CH₂CH₂-, - CH₂CH₂CH=CHCH₂CH₂-, -CH=CHCH₂CH₂CH(CH₃)-, -CH₂CH=CHCH₂CH(CH₃)-, -CH₂CH₂CH=CHCH(CH₃)-, -CH₂CH₂CH₂CH=CH(CH₃)-, - CH=CHCH₂CH(CH₃)CH₂-, -CH₂CH=CHCH(CH₃)CH₂-, - CH₂CH₂CH=CH(CH₃)CH₂-, -CH=CHCH(CH₃)CH₂CH₂-, - CH₂CH=CH(CH₃)CH₂CH₂-, -CH=CHCH₂CH₂CH₂CH₂CH₂-, - CH₂CH=CHCH₂CH₂CH₂CH₂-, -CH₂CH₂CH=CHCH₂CH₂CH₂-, - CH=CHCH₂CH₂CH₂CH(CH₃)-, -CH₂CH=CHCH₂CH₂CH(CH₃)-, - CH₂CH₂CH=CHCH₂CH(CH₃)-, -CH₂CH₂CH₂CH=CHCH(CH₃)-, - CH₂CH₂CH₂CH₂CH=C(CH₃)-, -CH=CHCH₂CH₂CH(CH₃)CH₂-, - CH₂CH=CHCH₂CH(CH₃)CH₂-, -CH₂CH₂CH=CHCH(CH₃)CH₂-, - CH₂CH₂CH₂CH=C(CH₃)CH₂-, -CH=CHCH₂CH(CH₃)CH₂CH₂-, - CH₂CH=CHCH(CH₃)CH₂CH₂-, -CH₂CH₂CH=C(CH₃)CH₂CH₂-, - CH₂CH₂CH₂CH(CH₃)CH=CH-, -CH=CHCH(CH₃)CH₂CH₂CH₂-, - CH₂CH=C(CH₃)CH₂CH₂CH₂-, -CH=CHCH₂CH₂CH₂CH₂CH₂CH₂-, - CH₂CH=CHCH₂CH₂CH₂CH₂CH₂-, -CH₂CH₂CH=CHCH₂CH₂CH₂CH₂-, - CH₂CH₂CH₂CH=CHCH₂CH₂CH₂-, -CH=CHCH₂CH₂CH₂CH₂CH(CH₃)-, - CH₂CH=CHCH₂CH₂CH₂CH(CH₃)-, -CH₂CH₂CH=CHCH₂CH₂CH(CH₃)-, - CH₂CH₂CH₂CH=CHCH₂CH(CH₃)-, -CH₂CH₂CH₂CH₂CH=CHCH(CH₃)-, - CH₂CH₂CH₂CH₂CH₂CH=C(CH₃)-, -CH=CHCH₂CH₂CH₂CH(CH₃)CH₂-, - CH₂CH=CHCH₂CH₂CH(CH₃)CH₂-, -CH₂CH₂CH=CHCH₂CH(CH₃)CH₂-, - CH₂CH₂CH₂CH=CHCH(CH₃)CH₂-, -CH₂CH₂CH₂CH₂CH=C(CH₃)CH₂-, - CH=CHCH₂CH₂CH(CH₃)CH₂CH₂-, -CH₂CH=CHCH₂CH(CH₃)CH₂CH₂-, - CH₂CH₂CH=CHCH(CH₃)CH₂CH₂-, -CH₂CH₂CH₂CH=C(CH₃)CH₂CH₂-, - CH₂CH₂CH₂CH₂CH(CH₃)CH=CH-, -CH=CHCH₂CH(CH₃)CH₂CH₂CH₂-, - CH₂CH=CHCH(CH₃)CH₂CH₂CH₂-, -CH₂CH₂CH=C(CH₃)CH₂CH₂CH₂-, - CH₂CH₂CH₂CH(CH₃)CH=CHCH₂-, -CH₂CH₂CH₂CH(CH₃)CH₂CH=CH-, - CH=CHCH₂CH₂CH₂CH₂CH₂CH₂CH₂-, -CH₂CH=CHCH₂CH₂CH₂CH₂CH₂CH₂-, - CH₂CH₂CH=CHCH₂CH₂CH₂CH₂CH₂-, -CH₂CH₂CH₂CH=CHCH₂CH₂CH₂CH₂-, - CH=CHCH₂CH₂CH₂CH₂CH₂CH(CH₃)-, -CH₂CH=CHCH₂CH₂CH₂CH₂CH(CH₃)-, - CH₂CH₂CH=CHCH₂CH₂CH₂CH(CH₃)-, -CH₂CH₂CH₂CH=CHCH₂CH₂CH(CH₃)-, - CH₂CH₂CH₂CH₂CH=CHCH₂CH(CH₃)-, -CH₂CH₂CH₂CH₂CH₂CH=CHCH(CH₃)-, - CH₂CH₂CH₂CH₂CH₂CH₂CH=C(CH₃)-, -CH=CHCH₂CH₂CH₂CH₂CH(CH₃)CH₂-, - CH₂CH=CHCH₂CH₂CH₂CH(CH₃)CH₂-, -CH₂CH₂CH=CHCH₂CH₂CH(CH₃)CH₂-, - CH₂CH₂CH₂CH=CHCH₂CH(CH₃)CH₂-, -CH₂CH₂CH₂CH₂CH=CHCH(CH₃)CH₂-, - CH₂CH₂CH₂CH₂CH₂CH=C(CH₃)CH₂-, -CH=CHCH₂CH₂CH₂CH(CH₃)CH₂CH₂-, - CH₂CH=CHCH₂CH₂CH(CH₃)CH₂CH₂-, -CH₂CH₂CH=CHCH₂CH(CH₃)CH₂CH₂-, - CH₂CH₂CH₂CH=CHCH(CH₃)CH₂CH₂-, -CH₂CH₂CH₂CH₂CH=C(CH₃)CH₂CH₂-, - CH₂CH₂CH₂CH₂CH₂CH(CH₃)CH=CH-, -CH=CHCH₂CH₂CH(CH₃)CH₂CH₂CH₂-, - CH₂CH=CHCH₂CH(CH₃)CH₂CH₂CH₂-, -CH₂CH₂CH=CHCH(CH₃)CH₂CH₂CH₂-, - CH₂CH₂CH₂CH=C(CH₃)CH₂CH₂CH₂-, -CH₂CH₂CH₂CH₂CH(CH₃)CH=CHCH₂-, - CH₂CH₂CH₂CH₂CH(CH₃)CH₂CH=CH-, -CH=CHCH₂CH(CH₃)CH₂CH₂CH₂CH₂-, - CH₂CH=CHCH(CH₃)CH₂CH₂CH₂CH₂-, -CH₂CH₂CH=C(CH₃)CH₂CH₂CH₂CH₂-, - CH=CHCH₂CH₂CH₂CH₂CH₂CH₂CH₂CH₂-, - CH₂CH=CHCH₂CH₂CH₂CH₂CH₂CH₂CH₂-, - CH₂CH₂CH=CHCH₂CH₂CH₂CH₂CH₂CH₂-, - CH₂CH₂CH₂CH=CHCH₂CH₂CH₂CH₂CH₂-, - CH₂CH₂CH₂CH₂CH=CHCH₂CH₂CH₂CH₂-, - CH=CHCH₂CH₂CH₂CH₂CH₂CH₂CH(CH₃)-, - CH₂CH=CHCH₂CH₂CH₂CH₂CH₂CH(CH₃)-, - CH₂CH₂CH=CHCH₂CH₂CH₂CH₂CH(CH₃)-, - CH₂CH₂CH₂CH=CHCH₂CH₂CH₂CH(CH₃)-, - CH₂CH₂CH₂CH₂CH=CHCH₂CH₂CH(CH₃)-, - CH₂CH₂CH₂CH₂CH₂CH=CHCH₂CH(CH₃)-, - CH₂CH₂CH₂CH₂CH₂CH₂CH=CHCH(CH₃)-, - CH₂CH₂CH₂CH₂CH₂CH₂CH₂CH=C(CH₃)-, - CH₂CH₂CH₂CH₂CH₂CH₂CH₂CH(CH₃)CH₂-, - CH=CHCH₂CH₂CH₂CH₂CH₂CH(CH₃)CH₂-, - CH₂CH=CHCH₂CH₂CH₂CH₂CH(CH₃)CH₂-, - CH₂CH₂CH=CHCH₂CH₂CH₂CH(CH₃)CH₂-, - CH₂CH₂CH₂CH=CHCH₂CH₂CH(CH₃)CH₂-, - CH₂CH₂CH₂CH₂CH=CHCH₂CH(CH₃)CH₂-, - CH₂CH₂CH₂CH₂CH₂CH=CHCH(CH₃)CH₂-, - CH₂CH₂CH₂CH₂CH₂CH₂CH=C(CH₃)CH₂-, - CH=CHCH₂CH₂CH₂CH₂CH(CH₃)CH₂CH₂-, - CH₂CH=CHCH₂CH₂CH₂CH(CH₃)CH₂CH₂-, - CH₂CH₂CH=CHCH₂CH₂CH(CH₃)CH₂CH₂-, - CH₂CH₂CH₂CH=CHCH₂CH(CH₃)CH₂CH₂-, - CH₂CH₂CH₂CH₂CH=CHCH(CH₃)CH₂CH₂-, - CH₂CH₂CH₂CH₂CH₂CH=C(CH₃)CH₂CH₂-, - CH₂CH₂CH₂CH₂CH₂CH₂CH(CH₃)CH=CH-, - CH₂CH₂CH₂CH₂CH₂CH(CH₃)CH₂CH₂CH₂-, - CH=CHCH₂CH₂CH₂CH(CH₃)CH₂CH₂CH₂-, - CH₂CH=CHCH₂CH₂CH(CH₃)CH₂CH₂CH₂-, - CH₂CH₂CH=CHCH₂CH(CH₃)CH₂CH₂CH₂-, - CH₂CH₂CH₂CH=CHCH(CH₃)CH₂CH₂CH₂-, - CH₂CH₂CH₂CH₂CH=C(CH₃)CH₂CH₂CH₂-, - CH₂CH₂CH₂CH₂CH₂CH(CH₃)CH=CHCH₂-, - CH₂CH₂CH₂CH₂CH₂CH(CH₃)CH₂CH=CH-, - CH=CHCH₂CH₂CH(CH₃)CH₂CH₂CH₂CH₂-, - CH₂CH=CHCH₂CH(CH₃)CH₂CH₂CH₂CH₂-, - CH₂CH₂CH=CHCH(CH₃)CH₂CH₂CH₂CH₂-, - CH₂CH₂CH₂CH=C(CH₃)CH₂CH₂CH₂CH₂-, - CH₂CH₂CH₂CH₂CH(CH₃)CH=CHCH₂CH₂-, - CH₂CH₂CH₂CH₂CH(CH₃)CH₂CH=CHCH₂-, - CH₂CH₂CH₂CH₂CH(CH₃)CH₂CH₂CH=CH₂-, - CH=CHCH₂CH₂CH₂CH₂CH₂CH₂CH₂CH₂CH₂-, - CH₂CH=CHCH₂CH₂CH₂CH₂CH₂CH₂CH₂CH₂-, - CH₂CH₂CH=CHCH₂CH₂CH₂CH₂CH₂CH₂CH₂-, - CH₂CH₂CH₂CH=CHCH₂CH₂CH₂CH₂CH₂CH₂-, - CH₂CH₂CH₂CH₂CH=CHCH₂CH₂CH₂CH₂CH₂-, - CH=CHCH₂CH₂CH₂CH₂CH₂CH₂CH₂CH(CH₃)-, - CH₂CH=CHCH₂CH₂CH₂CH₂CH₂CH₂CH(CH₃)-, - CH₂CH₂CH=CHCH₂CH₂CH₂CH₂CH₂CH(CH₃)-, - CH₂CH₂CH₂CH=CHCH₂CH₂CH₂CH₂CH(CH₃)-, - CH₂CH₂CH₂CH₂CH=CHCH₂CH₂CH₂CH(CH₃)-, - CH₂CH₂CH₂CH₂CH₂CH=CHCH₂CH₂CH(CH₃)-, - CH₂CH₂CH₂CH₂CH₂CH₂CH=CHCH₂CH(CH₃)-, - CH₂CH₂CH₂CH₂CH₂CH₂CH₂CH=CHCH(CH₃)-, - CH₂CH₂CH₂CH₂CH₂CH₂CH₂CH₂CH=C(CH₃)-, - CH=CHCH₂CH₂CH₂CH₂CH₂CH₂CH(CH₃)CH₂-, - CH₂CH=CHCH₂CH₂CH₂CH₂CH₂CH(CH₃)CH₂-, - CH₂CH₂CH=CHCH₂CH₂CH₂CH₂CH(CH₃)CH₂-, - CH₂CH₂CH₂CH=CHCH₂CH₂CH₂CH(CH₃)CH₂-, - CH₂CH₂CH₂CH₂CH=CHCH₂CH₂CH(CH₃)CH₂-, - CH₂CH₂CH₂CH₂CH₂CH=CHCH₂CH(CH₃)CH₂-, - CH₂CH₂CH₂CH₂CH₂CH₂CH=CHCH(CH₃)CH₂-, - CH₂CH₂CH₂CH₂CH₂CH₂CH₂CH=C(CH₃)CH₂-, - CH=CHCH₂CH₂CH₂CH₂CH₂CH(CH₃)CH₂CH₂-, - CH₂CH=CHCH₂CH₂CH₂CH₂CH(CH₃)CH₂CH₂-, - CH₂CH₂CH=CHCH₂CH₂CH₂CH(CH₃)CH₂CH₂-, - CH₂CH₂CH₂CH=CHCH₂CH₂CH(CH₃)CH₂CH₂-, - CH₂CH₂CH₂CH₂CH=CHCH₂CH(CH₃)CH₂CH₂-, - CH₂CH₂CH₂CH₂CH₂CH=CHCH(CH₃)CH₂CH₂-, - CH₂CH₂CH₂CH₂CH₂CH₂CH=C(CH₃)CH₂CH₂-, - CH₂CH₂CH₂CH₂CH₂CH₂CH₂CH(CH₃)CH=CH-, - CH₂CH₂CH₂CH₂CH₂CH₂CH(CH₃)CH₂CH₂CH₂-, - CH=CHCH₂CH₂CH₂CH₂CH(CH₃)CH₂CH₂CH₂-, - CH₂CH=CHCH₂CH₂CH₂CH(CH₃)CH₂CH₂CH₂-, - CH₂CH₂CH=CHCH₂CH₂CH(CH₃)CH₂CH₂CH₂-, - CH₂CH₂CH₂CH=CHCH₂CH(CH₃)CH₂CH₂CH₂-, - CH₂CH₂CH₂CH₂CH=CH₂CH(CH₃)CH₂CH₂CH₂-, - CH₂CH₂CH₂CH₂CH₂CH=C(CH₃)CH₂CH₂CH₂-, - CH₂CH₂CH₂CH₂CH₂CH₂CH(CH₃)CH=CHCH₂-, - CH₂CH₂CH₂CH₂CH₂CH₂CH(CH₃)CH₂CH=CH-, - CH=CHCH₂CH₂CH₂CH(CH₃)CH₂CH₂CH₂CH₂-, - CH₂CH=CHCH₂CH₂CH(CH₃)CH₂CH₂CH₂CH₂-, - CH₂CH₂CH=CHCH₂CH(CH₃)CH₂CH₂CH₂CH₂-, - CH₂CH₂CH₂CH=CHCH(CH₃)CH₂CH₂CH₂CH₂-, - CH₂CH₂CH₂CH₂CH=C(CH₃)CH₂CH₂CH₂CH₂-, - CH₂CH₂CH₂CH₂CH₂CH(CH₃)CH=CHCH₂CH₂-, - CH₂CH₂CH₂CH₂CH₂CH(CH₃)CH₂CH=CHCH₂-, - CH₂CH₂CH₂CH₂CH₂CH(CH₃)CH₂CH₂CH=CH₂-, - CH=CHCH₂CH₂CH(CH₃)CH₂CH₂CH₂CH₂CH₂-, - CH₂CH=CHCH₂CH(CH₃)CH₂CH₂CH₂CH₂CH₂-, - CH₂CH₂CH=CHCH(CH₃)CH₂CH₂CH₂CH₂CH₂-, - CH₂CH₂CH₂CH=C(CH₃)CH₂CH₂CH₂CH₂CH₂-, - CH=CHCH₂CH₂CH₂CH₂CH₂CH₂CH₂CH₂CH₂CH₂-, - CH₂CH=CHCH₂CH₂CH₂CH₂CH₂CH₂CH₂CH₂CH₂-, - CH₂CH₂CH=CHCH₂CH₂CH₂CH₂CH₂CH₂CH₂CH₂-, - CH₂CH₂CH₂CH=CHCH₂CH₂CH₂CH₂CH₂CH₂CH₂-, - CH₂CH₂CH₂CH₂CH=CHCH₂CH₂CH₂CH₂CH₂CH₂-, - CH=CHCH₂CH₂CH₂CH₂CH₂CH₂CH₂CH₂CH(CH₃)-, - CH₂CH=CHCH₂CH₂CH₂CH₂CH₂CH₂CH₂CH(CH₃)-, - CH₂CH₂CH=CHCH₂CH₂CH₂CH₂CH₂CH₂CH(CH₃)-, - CH₂CH₂CH₂CH=CHCH₂CH₂CH₂CH₂CH₂CH(CH₃)-, - CH₂CH₂CH₂CH₂CH=CHCH₂CH₂CH₂CH₂CH(CH₃)-, - CH₂CH₂CH₂CH₂CH₂CH=CHCH₂CH₂CH₂CH(CH₃)-, - CH₂CH₂CH₂CH₂CH₂CH₂CH=CHCH₂CH₂CH(CH₃)-, - CH₂CH₂CH₂CH₂CH₂CH₂CH₂CH₂CH=CHCH(CH₃)-, - CH₂CH₂CH₂CH₂CH₂CH₂CH₂CH₂CH₂CH=C(CH₃)-, - CH=CHCH₂CH₂CH₂CH₂CH₂CH₂CH₂CH(CH₃)CH₂-, - CH₂CH=CHCH₂CH₂CH₂CH₂CH₂CH₂CH(CH₃)CH₂-, - CH₂CH₂CH=CHCH₂CH₂CH₂CH₂CH₂CH(CH₃)CH₂-, - CH₂CH₂CH₂CH=CHCH₂CH₂CH₂CH₂CH(CH₃)CH₂-, - CH₂CH₂CH₂CH₂CH=CHCH₂CH₂CH₂CH(CH₃)CH₂-, - CH₂CH₂CH₂CH₂CH₂CH=CH₂CH₂CH₂CH(CH₃)CH₂-, - CH₂CH₂CH₂CH₂CH₂CH₂CH=CHCH₂CH(CH₃)CH₂-, - CH₂CH₂CH₂CH₂CH₂CH₂CH₂CH=CH₂H(CH₃)CH₂-, - CH₂CH₂CH₂CH₂CH₂CH₂CH₂CH₂CH=C(CH₃)CH₂-, - CH=CHCH₂CH₂CH₂CH₂CH₂CH₂CH(CH₃)CH₂CH₂-, - CH₂CH=CHCH₂CH₂CH₂CH₂CH₂CH(CH₃)CH₂CH₂-, - CH₂CH₂CH=CHCH₂CH₂CH₂CH₂CH(CH₃)CH₂CH₂-, - CH₂CH₂CH₂CH=CHCH₂CH₂CH₂CH(CH₃)CH₂CH₂-, - CH₂CH₂CH₂CH₂CH=CHCH₂CH₂CH(CH₃)CH₂CH₂-, - CH₂CH₂CH₂CH₂CH₂CH=CHCH₂CH(CH₃)CH₂CH₂-, - CH₂CH₂CH₂CH₂CH₂CH₂CH=CHCH(CH₃)CH₂CH₂-, - CH₂CH₂CH₂CH₂CH₂CH₂CH₂CH=C(CH₃)CH₂CH₂-, - CH₂CH₂CH₂CH₂CH₂CH₂CH₂CH₂CH(CH₃)CH=CH-, - CH=CHCH₂CH₂CH₂CH₂CH₂CH(CH₃)CH₂CH₂CH₂-, - CH₂CH=CHCH₂CH₂CH₂CH₂CH(CH₃)CH₂CH₂CH₂-, - CH₂CH₂CH=CHCH₂CH₂CH₂CH(CH₃)CH₂CH₂CH₂-, - CH₂CH₂CH₂CH=CHCH₂CH₂CH(CH₃)CH₂CH₂CH₂-, - CH₂CH₂CH₂CH₂CH=CHCH₂CH(CH₃)CH₂CH₂CH₂-, - CH₂CH₂CH₂CH₂CH₂CH=CH₂CH(CH₃)CH₂CH₂CH₂-, - CH₂CH₂CH₂CH₂CH₂CH₂CH=C(CH₃)CH₂CH₂CH₂-, - CH₂CH₂CH₂CH₂CH₂CH₂CH₂CH(CH₃)CH=CHCH₂-, - CH₂CH₂CH₂CH₂CH₂CH₂CH₂CH(CH₃)CH₂CH=CH-, - CH=CHCH₂CH₂CH₂CH₂CH(CH₃)CH₂CH₂CH₂CH₂-, - CH₂CH=CHCH₂CH₂CH₂CH(CH₃)CH₂CH₂CH₂CH₂-, - CH₂CH₂CH=CHCH₂CH₂CH(CH₃)CH₂CH₂CH₂CH₂-, - CH₂CH₂CH₂CH=CHCH₂CH(CH₃)CH₂CH₂CH₂CH₂-, - CH₂CH₂CH₂CH₂CH=CHCH(CH₃)CH₂CH₂CH₂CH₂-, - CH₂CH₂CH₂CH₂CH₂CH=C(CH₃)CH₂CH₂CH₂CH₂-, - CH₂CH₂CH₂CH₂CH₂CH₂CH(CH₃)CH=CHCH₂CH₂-, - CH₂CH₂CH₂CH₂CH₂CH₂CH(CH₃)CH₂CH=CHCH₂-, - CH₂CH₂CH₂CH₂CH₂CH₂CH(CH₃)CH₂CH₂CH=CH-, - CH=CHCH₂CH₂CH₂CH(CH₃)CH₂CH₂CH₂CH₂CH₂-, - CH₂CH=CHCH₂CH₂CH(CH₃)CH₂CH₂CH₂CH₂CH₂-, - CH₂CH₂CH=CHCH₂CH(CH₃)CH₂CH₂CH₂CH₂CH₂-, - CH₂CH₂CH₂CH=CHCH(CH₃)CH₂CH₂CH₂CH₂CH₂-, - CH₂CH₂CH₂CH₂CH=C(CH₃)CH₂CH₂CH₂CH₂CH₂-.

The (total) number of carbon atoms in the cyclic saturated hydrocarbon group is preferably 3 to 20, more preferably 3 to 10, further preferably 3 to 8, particularly preferably 4 to 6, from the viewpoint of keeping contact resistance low. The saturated carbocyclic ring contained in the cyclic saturated hydrocarbon group is preferably a 3- to 8-membered ring, more preferably a 4- to 6-membered ring. The saturated carbocyclic ring may be a monocyclic ring or may be a condensed ring in which a plurality of rings are condensed. The saturated carbocyclic ring may have a side chain. Examples of the side chain can include alkyl groups having 1 to 6 carbon atoms.

Specific examples of the cyclic saturated hydrocarbon group can include, but are not limited to, compounds given below. In the examples given below, a cyclic saturated hydrocarbon group having no side chain is described, though the cyclic saturated hydrocarbon group is not limited thereto. One or more side chains (e.g., an alkyl group having 1 to 6 carbon atoms) may be present. One of the bonds "-*" represents a bond on the first functional group side, and the other bond represents a bond on the second functional group side. Such a bond may be attached directly to the first functional group or the second functional group or may be attached to the first functional group or the second functional group via an additional group (e.g., a chain saturated hydrocarbon group, a chain unsaturated hydrocarbon group, or a cyclic unsaturated hydrocarbon group). Although a form in which the first functional group and the second functional group are bonded to the carbocyclic ring is described here, these functional groups may be bonded to a side chain moiety.

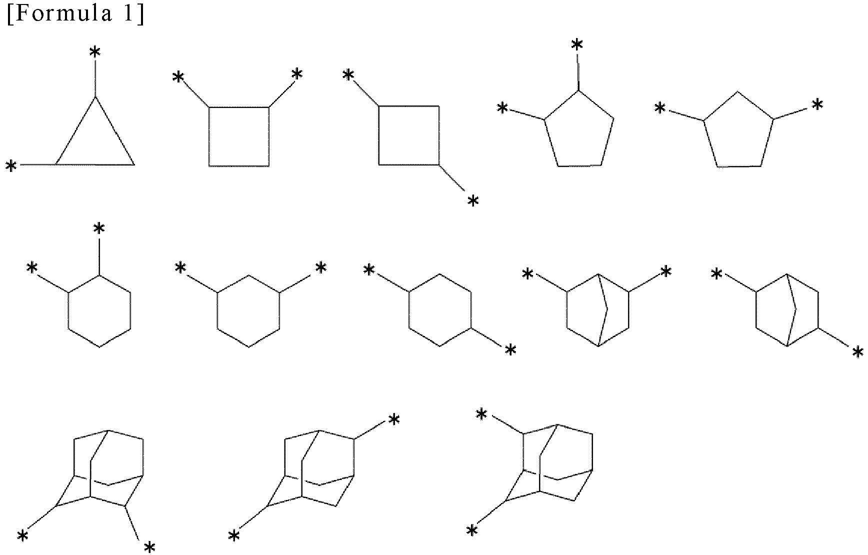

The cyclic unsaturated hydrocarbon group may have one unsaturated bond (double bond or triple bond) or may have two or more unsaturated bonds, and the position of the unsaturated bond is not particularly limited. The (total) number of carbon atoms in the cyclic unsaturated hydrocarbon group is preferably 3 to 20, more preferably 3 to 10, further preferably 3 to 8, particularly preferably 4 to 6, from the viewpoint of keeping contact resistance low. The carbocyclic ring contained in the cyclic unsaturated hydrocarbon group may be a monocyclic ring such as a benzene ring, or may be a condensed ring such as a naphthalene ring or an anthracene ring. The carbocyclic ring is preferably a 3- to 8-membered ring, more preferably a 4- to 6-membered ring. The carbocyclic ring may have a side chain. Examples of the side chain can include alkyl groups having 1 to 6 carbon atoms.

Specific examples of the cyclic unsaturated hydrocarbon group can include, but are not limited to, compounds given below. In the examples given below, a cyclic unsaturated hydrocarbon group having no side chain is described, though the cyclic unsaturated hydrocarbon group is not limited thereto. One or more side chains (e.g., an alkyl group having 1 to 6 carbon atoms) may be present. One of the bonds "-^{∗}" represents a bond on the first functional group side, and the other bond represents a bond on the second functional group side. Such a bond may be attached directly to the first functional group or the second functional group or may be attached to the first functional group or the second functional group via an additional group (e.g., a chain saturated hydrocarbon group, a chain unsaturated hydrocarbon group, or a cyclic saturated hydrocarbon group). Although a form in which the first functional group and the second functional group are bonded to the carbocyclic ring is described here, these functional groups may be bonded to a side chain moiety.

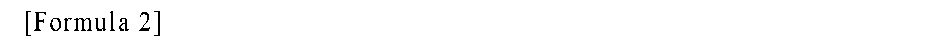

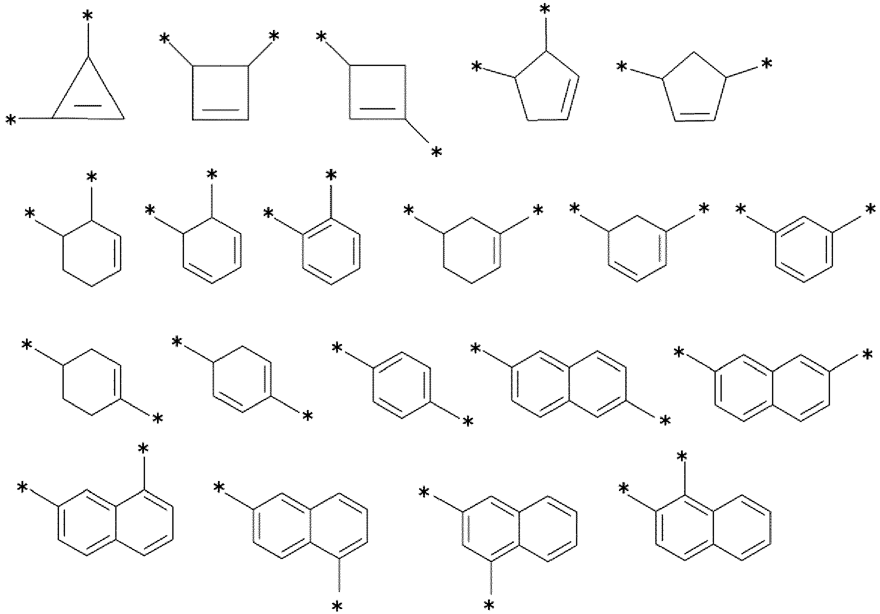

The first functional group and the second functional group in the first compound are not particularly limited by their positions and are preferably disposed at opposed ends, respectively, of the main chain backbone of the first compound, from the viewpoint of disposing the metal and the nanocarbon material via the first compound. Thus, the first compound is preferably a compound that has the first functional group at one end (e.g., one of opposed ends) of a main chain backbone including at least one of a chain saturated hydrocarbon group, a chain unsaturated hydrocarbon group, a cyclic saturated hydrocarbon group and a cyclic unsaturated hydrocarbon group, and has the second functional group at the other end (e.g., the other opposed end). In the case of a cyclic hydrocarbon group, it is preferred that the first functional group and the second functional group should be most distantly positioned. For example, in the case of a benzene ring, it is preferred that the first functional group and the second functional group should be disposed at a para position. Thus, it is preferred that the first compound should contain both the first functional group and the second functional group on the main chain backbone.

Examples of the first compound can include compounds represented by the following formula 1, any of which can be preferably used.

Formula 1 A¹-R¹¹-A²

In the formula 1, A¹ represents a thiol group, A² represents an amide group (-C(=O)NR³R⁴), a hydroxy group, a carboxy group, a carbonyl group, an amino group, a sulfo group or a ferrocenyl group, and R¹¹ is a group consisting of at least one of a chain saturated hydrocarbon group having 2 to 30 carbon atoms, a chain unsaturated hydrocarbon group having 2 to 30 carbon atoms, a cyclic unsaturated hydrocarbon group having 3 to 20 carbon atoms and a cyclic saturated hydrocarbon group having 3 to 20 carbon atoms. R³ and R⁴ each independently represent -H or an alkyl group having 1 to 6 carbon atoms and optionally having a double bond. R¹¹ is preferably a linear saturated hydrocarbon group having 4 to 16 carbon atoms or a branched saturated hydrocarbon group having 4 to 16 carbon atoms, more preferably a linear saturated hydrocarbon group having 5 to 16 carbon atoms or a branched saturated hydrocarbon group having 5 to 16 carbon atoms, from the viewpoint of the maintenance of abrasion resistance and low contact resistance. A² is preferably a hydroxy group, a carboxy group or - C(=O)NR³R⁴, more preferably -C(=O)NR³R⁴, and at least one of R³ and R⁴ preferably represents -H, from the viewpoint of affinity for the metal.

Any of the following compounds can be more preferably used as the first compound.

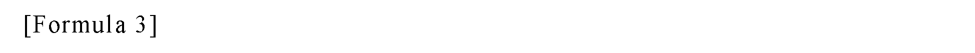

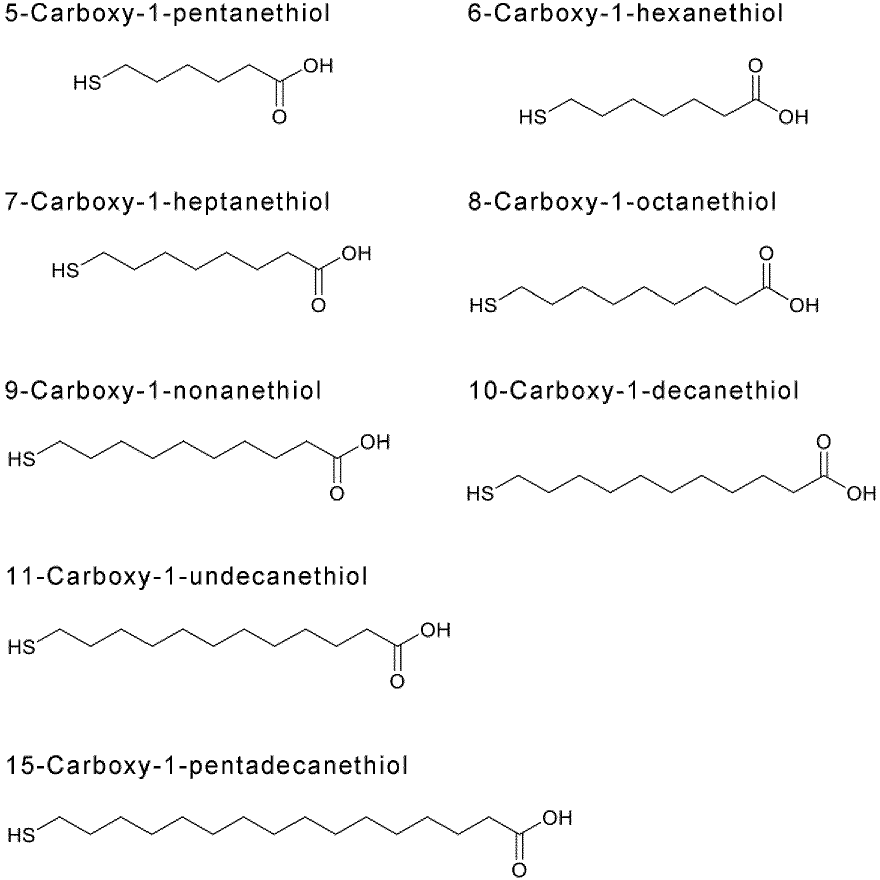

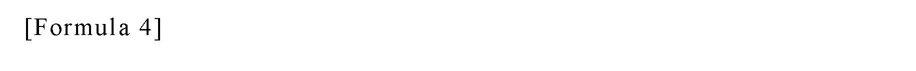

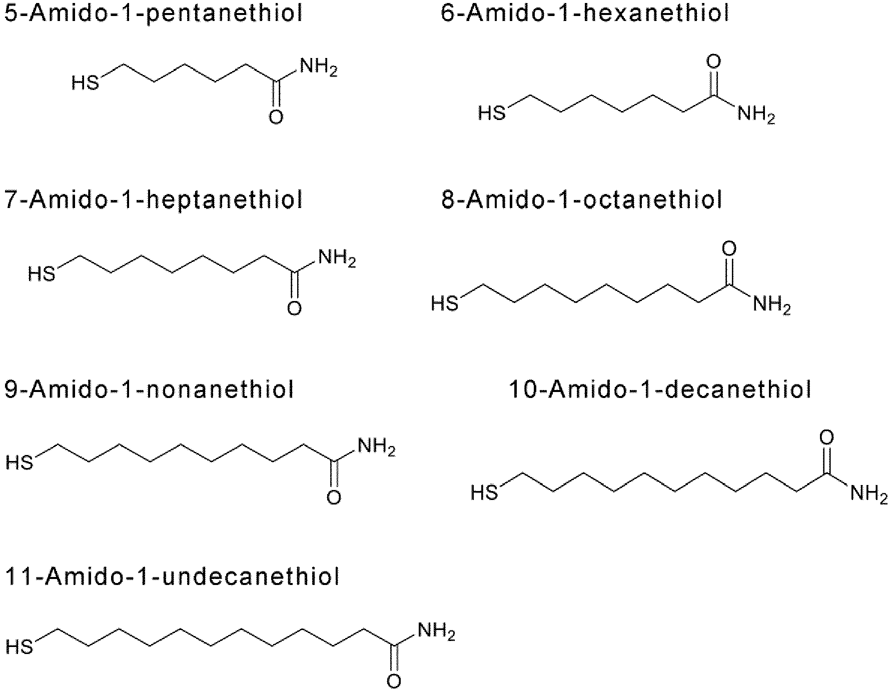

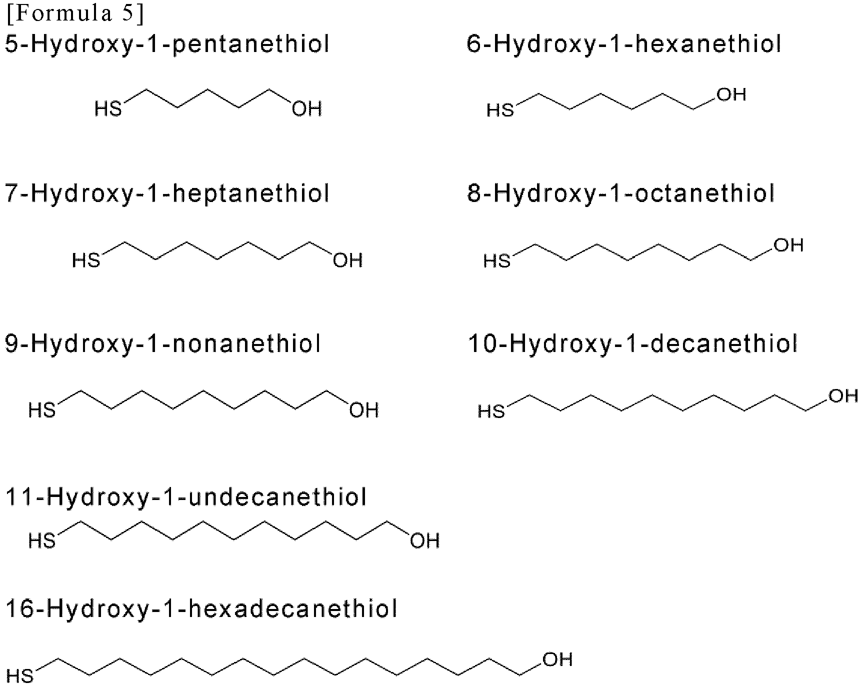

### <Method for producing structure>

### (1) Method for producing first structure

A method for producing the first structure mentioned above has the step of coating an at least partial surface of a metal with a nanocarbon material (coating step 1-1).

The method for producing the first structure may have the following steps: the step of providing the nanocarbon material (nanocarbon material provision step); and
the step of providing a structure (treatment object (coating object)) having a metal surface to be coated with the nanocarbon material (treatment object provision step).

The nanocarbon material provision step may also include the step of processing the nanocarbon material (processing step). The coating step 1-1 may further include the step of preparing a treatment liquid containing the nanocarbon material (treatment liquid preparation step 1-1).

The order of these steps is not particularly limited, and the steps can be appropriately performed.

Hereinafter, these steps will be described in detail. In the description here, a carbon nanohorn aggregate is focused on as the nanocarbon material, though the nanocarbon material is not limited thereto. As for other nanocarbon materials as well, the structure can be appropriately produced by use of a conventional method known in the art.

### (Nanocarbon material provision step)

The carbon nanohorn aggregate can be prepared by, for example, a CO₂ laser abrasion method. Specifically, sintered round-bar carbon as a solid carbon substance is placed in a vacuum container, and the solid carbon substance is irradiated with CO₂ laser beam at room temperature (e.g., 25°C) for 30 minutes in an Ar atmosphere under conditions of laser power density: 30 kW/cm² and target rotational speed: 2 rpm. A soot-like carbon nanohorn aggregate can thereby be obtained. It can be confirmed by observation under a transmission electron microscope (TEM) that the obtained substance has a carbon nanohorn aggregate structure.

Next, the obtained carbon nanohorn aggregate can be subjected to various processing treatments such as oxidation treatment, surface treatment, or crystallization treatment (processing step).

Specifically, fine holes may be opened (hole opening) by the oxidation treatment of the carbon nanohorn aggregate in order to improve the dispersibility or reactivity of the carbon nanohorn aggregate. This oxidation treatment allows a surface functional group containing oxygen (e.g., -OH, -C(=O)-, or -COOH) to be formed in the opened hole part of the carbon nanohorn aggregate.

In the oxidation treatment, both a gas phase process and a liquid phase process can be used. In the case of the gas phase process, the oxidation treatment is performed by heat treatment in an atmospheric gas containing oxygen, such as air, oxygen, or carbon dioxide. Among them, heat treatment in air is preferred from the viewpoint of cost. The temperature of the heat treatment is preferably 300°C to 650°C, more preferably 400°C to 550°C. When the heat treatment temperature is 300°C or higher, carbon is highly combustible and can easily open holes. When the heat treatment temperature is 650°C or lower, the combustion of the whole carbon nanohorn aggregate can be easily controlled.

In the case of the liquid phase process, the oxidation treatment is performed in a liquid containing an oxidizing substance such as nitric acid, sulfuric acid, or hydrogen peroxide. For nitric acid, the temperature of the treatment is preferably room temperature (e.g., 25°C) to 120°C. When the treatment temperature is 120°C or lower, an oxidative power is easy to keep at a moderate level and oxidation more than necessary can be easily prevented. For hydrogen peroxide, the treatment temperature is preferably room temperature to 100°C, more preferably 40°C or higher. When the treatment temperature is room temperature to 100°C, an oxidative power acts efficiently and holes can be efficiently opened. When the treatment temperature is 40°C to 100°C, the effect can be more markedly obtained. In the liquid phase process, the oxidation treatment can be more effectively performed by using light irradiation in combination therewith.

The crystallinity of the carbon nanohorn aggregate can be improved by heat treatment in a non-oxidizing atmosphere such as an inert gas, hydrogen, or vacuum. In this respect, the heat treatment temperature is preferably 800°C to 2000°C, more preferably 1000°C to 1500°C.

The surface of the nanocarbon material may be modified with various functional groups by various processing treatments. For example, the nanocarbon material is treated with plasma or treated with a reaction reagent such as an oxidizing agent to form a hydroxy group, which is then substituted by chlorine using SOCl₂. Then, this chlorine moiety can be substituted by an amino group using ammonia. Alternatively, a halogen atom such as the chlorine may be reacted with hydrogen sulfide in the presence of a base to form a thiol group. The hydroxy group may be reacted with a methylating agent in the presence of a base to form a methoxy group. Also, the hydroxy group may be reacted with methanol in the presence of a catalyst to form a methyl group. A hydroxy group in a carboxy group prepared by heat treatment may be converted to chlorine with SOCl₂, and the chlorine moiety can be substituted by an amino group using ammonia to form an amide group. Thus, a conventional approach known in the art can be appropriately used in the introduction of the surface functional group.

If necessary, the surface functional group of the carbon nanohorn aggregate may be removed. For example, the surface functional group containing oxygen (a carbonyl group, a carboxy group, or a hydroxy group) formed in the opened hole part by hole opening treatment can be removed by heat treatment. In this respect, the heat treatment temperature can be 150°C to 2000°C. For example, in the case of removing a surface functional group such as a carboxy group or a hydroxy group, the heat treatment temperature is preferably 150°C to 600°C. In the case of removing a surface functional group such as a carbonyl group, the heat treatment temperature is preferably 600°C or higher. Alternatively, the surface functional group may be removed by reduction in a gas or liquid atmosphere. In the reduction in a gas atmosphere, hydrogen can be used, and this operation can also serve as the improvement in crystallinity described above. In the liquid atmosphere, hydrazine or the like can be used. A commercially available product may be used as the nanocarbon material. The nanocarbon material may also be prepared by appropriately introducing or removing such a functional group to or from a purchased starting material by use of a conventional approach known in the art.

### (Treatment object provision step)

The structure serving as a treatment object can be appropriately used as long as the structure has a metal surface. The treatment object can also be appropriately prepared by subjecting the surface of the structure to metal plating by a conventional method known in the art.

### (Coating step 1-1)

First, a treatment liquid containing the nanocarbon material is prepared (treatment liquid preparation step 1-1). Specifically, the nanocarbon material and an organic solvent (dispersion medium) are added to a container, and ultrasonic vibration is applied to the container until the nanocarbon material is uniformly dispersed in the organic solvent. A treatment liquid (dispersion) can thereby be obtained. The treatment liquid may contain various additives (an additional lubricant, etc.) within a range that allows the advantageous effects of the present invention to be obtained. The organic solvent is not particularly limited. It is preferred to use an organic solvent that allows a stable treatment liquid without precipitates to be prepared when the nanocarbon material, etc. is added, from the viewpoint of the large-scale production of the structure. Particularly, it is more preferred to use an organic solvent that allows the nanocarbon material to be uniformly dispersed and can be easily removed (i.e., the boiling point is low) (e.g., by natural drying). Specific examples of the organic solvent can include alcohols such as ethanol, isopropyl alcohol (IPA) and isobutyl alcohol, hexane, toluene, dichloroethane, and N-methylpyrrolidone (NMP).

The content percentage of the nanocarbon material in the treatment liquid can be appropriately set and is preferably 0.01 to 1.0% by mass, more preferably 0.02 to 0.5% by mass, further preferably 0.05 to 0.2% by mass, from the viewpoint of workability and adherence to the metal surface.

The nanocarbon material (particularly, a carbon nanohorn aggregate) easily maintains a stable dispersed state in the treatment liquid and therefore has favorable productivity.

Subsequently, a coating site of the treatment object is dipped in this treatment liquid for a given time so that the treatment liquid adheres to the coating site. Then, the treatment object is taken out thereof and dried (e.g., naturally in air). The dipping time can be appropriately set depending on the shape of the treatment object, etc. A longer dipping time improves the rate of coating of the treatment object with the nanocarbon material and is therefore preferred. However, the dipping time is preferably 2 to 90 minutes, more preferably 10 to 60 minutes, further preferably 30 to 45 minutes, from the viewpoint of working efficiency and the rate of adhesion. The treatment liquid, even when adhering to the structure surface, is not sticky and can maintain favorable texture.

Although dip coating is described as a coating method with the treatment liquid here, other conventional methods known in the art such as spray coating and roll coating can be appropriately used.

In this way, the structure having the nanocarbon material disposed on at least a part of the metal surface can be obtained.

### (2) Method for producing second structure

A method for producing the second structure mentioned above has the step of coating an at least partial surface of a metal with a material containing a nanocarbon material and an organic compound (first compound) having at least a first functional group and a second functional group (coating step 2-1).

The method for producing the second structure may have the step of providing the first compound (first compound provision step) and the nanocarbon material provision step and the treatment object provision step mentioned above. The nanocarbon material provision step may also have the processing step mentioned above. The coating step 2-1 may further include the step of preparing a treatment liquid containing the nanocarbon material and the first compound (treatment liquid preparation step 2-1).

The order of these steps is not particularly limited, and the steps can be appropriately performed. Hereinafter, these steps will be described. The nanocarbon material provision step, the treatment object provision step and the processing step are as mentioned above, so that the description will be omitted.

### (First compound provision step)

The first compound having the first functional group and the second functional group mentioned above may be a purchased commercially available product or may be prepared by appropriately introducing these functional groups to a purchased starting material by use of a conventional approach known in the art. A commercially available product was used in Examples mentioned later.

### (Coating step 2-1)

First, a treatment liquid containing the nanocarbon material and the first compound is prepared (treatment liquid preparation step 2-1). Specifically, the nanocarbon material, the first compound, and an organic solvent are added to a container, and ultrasonic vibration is applied to the container until the nanocarbon material and the first compound are uniformly dispersed in the organic solvent. A treatment liquid (dispersion) can thereby be obtained. The treatment liquid may contain various additives within a range that allows the advantageous effects of the present invention to be obtained. The organic solvent is not particularly limited. It is preferred to use an organic solvent that allows a stable treatment liquid without precipitates to be prepared when the nanocarbon material and the first compound, etc. are added, from the viewpoint of the large-scale production of the structure. Particularly, it is more preferred to use an organic solvent that allows the nanocarbon material and the first compound to be uniformly dispersed and can be easily removed (i.e., the boiling point is low) (e.g., by natural drying). Specific examples of the organic solvent can include the same as those described in the coating step 1-1. The content percentage of the nanocarbon material in the treatment liquid can be appropriately set and is preferably 0.01 to 1.0% by mass, more preferably 0.02 to 0.5% by mass, further preferably 0.05 to 0.2% by mass, from the viewpoint of workability and adherence to the metal surface. The content percentage of the first compound in the treatment liquid can be appropriately set and is preferably 0.01 to 1.0% by mass, more preferably 0.02 to 0.5% by mass, further preferably 0.05 to 0.2% by mass, from the viewpoint of workability and adherence to the metal surface. The balance is the organic solvent (and other additives, if necessary).

Subsequently, a coating site of the treatment object is dipped in this treatment liquid for a given time so that the treatment liquid adheres to the coating site. Then, the treatment object is taken out thereof and dried (e.g., naturally in air). The dipping time described in the coating step 1-1 can be similarly applied thereto. The treatment liquid, even when adhering to the structure surface, is not sticky and can maintain favorable texture. For coating with the treatment liquid, other coating methods such as spray coating and roll coating can also be appropriately adopted.

In this way, the structure having the metal and the nanocarbon material disposed via the first compound can be obtained.

### <Sliding member>

The sliding member of the present invention has at least one of the surface configurations of the first structure and the second structure on at least a part of a sliding surface. The sliding member is not particularly limited by its purpose of usage as long as the sliding member has a sliding surface with which other members come into contact. The sliding member can be used as, for example, an automobile sliding member such as a cylinder or a piston.

### <Connector>

The connector of the present invention has at least one of the surface configurations of the first structure and the second structure on at least a part of a sliding surface. For example, a connector pair including two connectors capable of mating (coming into contact) with each other (e.g., by slide) can be used as the connector. Each connector can be, for example, a substrate connector to be installed on a circuit substrate, and the connector can also be suitably used as other connectors.

### Examples

In order to confirm the contact performance (long-term maintenance of abrasion resistance and low contact resistance) of the structure of the present invention, a verification experiment was performed by procedures given below. Examples 1 to 14 mentioned later are examples that correspond to Examples of the structure of the present invention, and example 15 is an example that corresponds to Comparative Example.

### (Provision of first compound)

Six types of first compounds, 7-amido-1-heptanethiol, 5-carboxy-1-pentanethiol, 11-hydroxy-1-undecanethiol, 10-amido-1-decanethiol, 15-carboxy-1-pentadecanethiol, and 16-hydroxy-1-hexadecanethiol (all manufactured by Dojindo Laboratories), were provided, as shown in Table 1.

These compounds each have a linear saturated hydrocarbon group on the main chain backbone and have a thiol group at one of the ends and a carboxy group, a hydroxy group or an amide group at the other end.

### (Provision of nanocarbon material)

Two types of nanocarbon materials, carbon nanohorns (hereinafter, also abbreviated to CNHs) (manufactured by NEC Corp., trade name: Carbon Nanohorns), and a multilayer carbon nanotube (hereinafter, also abbreviated to CNT) (manufactured by Showa Denko K.K., trade name: VGCF-H), were used. CNT was heat-treated at 770°C in advance.

### (Preparation of treatment liquid)

In each example shown in examples 1 to 14, 50 ml of isopropyl alcohol (IPA) was placed as a solvent (dispersion medium) in a container. Then, 50 mg of the nanocarbon material shown in Table 1 and 100 mg of the first compound shown in Table 1 were added into this solution, and ultrasonic vibration was applied to the container until the nanocarbon material and the first compound were uniformly dispersed in the solvent. A treatment liquid was thereby obtained. In examples 13 and 14, the treatment liquid contained no first compound, and only the nanocarbon material was dispersed in IPA. In example 15, the treatment liquid itself was not prepared.

### (Verification of contact performance)

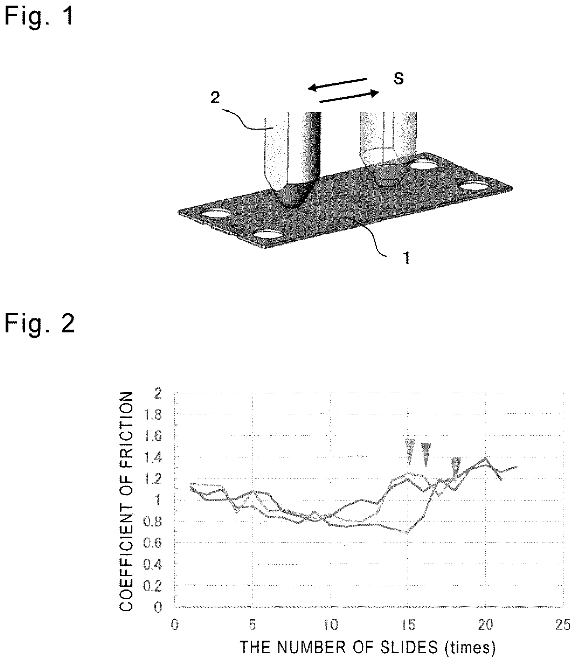

Flat plate 1 that represented a contact part of the structure shown in Fig. 1, and probe 2 whose distal end was processed into the shape of sphere R1 were provided. The plate and the probe are made of copper or its alloy, and their surfaces were silver-plated with a thickness of 5 µm. The plate and the probe were dipped in the treatment liquid containing the nanocarbon material (and the first compound) (in combination) shown in Table 1 for the dipping time shown in Table 1, then taken out thereof, and naturally dried in the atmosphere. A plate and a probe were thereby prepared in which the nanocarbon material (and the first compound) shown in Table 1 were attached to the silver plating surface. In example 15, the treatment liquid itself was not prepared as mentioned above, and the dipping of the plate and the probe in the treatment liquid was not performed.

Next, the surface of the sphere R1 of the probe was brought into contact with the plate surface obtained in each example, and the probe was shuttled with a one-way width of 10 mm in the slide directions indicated by arrows S while pressed with a 6 N vertical force. The coefficient of friction and abrasion state of the plate surface were observed. In Fig. 1, an apparatus for slide is not shown.

This repetitive action of reciprocal slide is considered as the same action as the repetition of the insertion and removal of the structure, for example, a connector, and can reproduce the abrasion of the connector contact part induced by the repetition of insertion and removal, and elevation in insertion force and removal force.

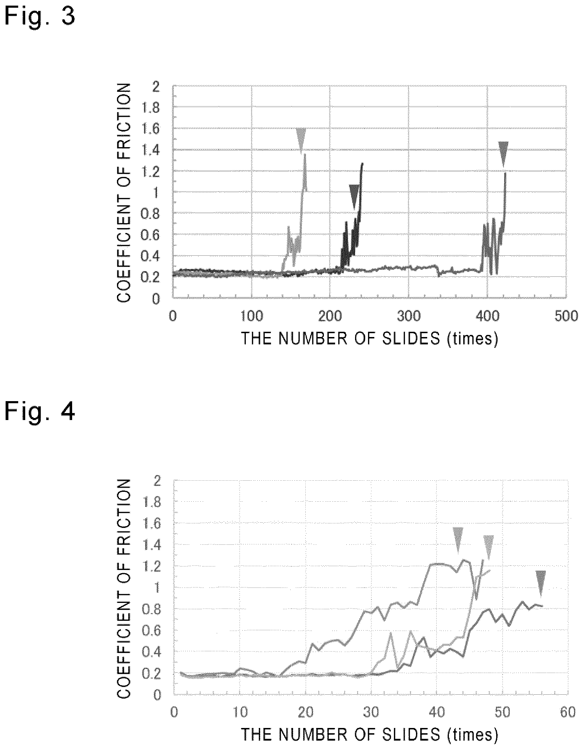

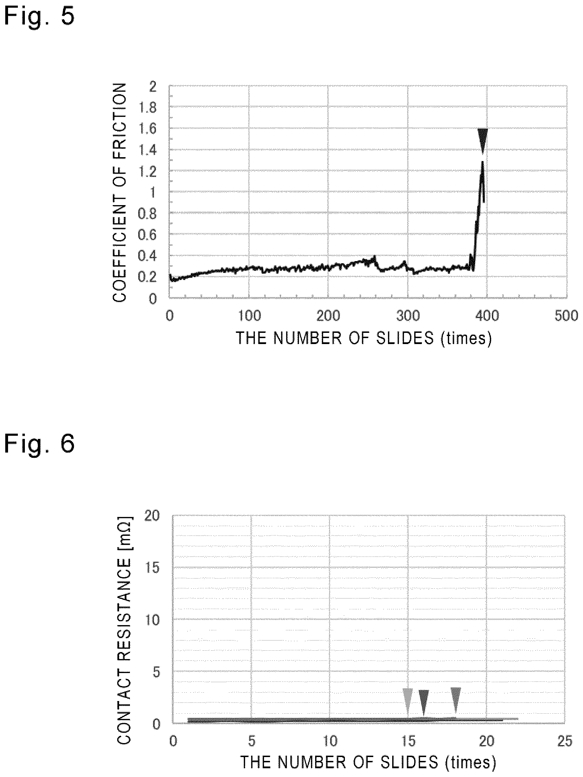

In this context, changes in coefficient of friction of the plate surface against the number of slides are shown in Fig. 2 in the case of example 15 (in which the surface was merely silver-plated), in Fig. 3 in the case of example 1, in Fig. 4 in the case of example 3, and in Fig. 5 in the case of example 4. In each example, the plate and the probe were prepared three times, and their respective measurements were performed. The ordinates of these graphs each depict the coefficient of friction of the plate surface, and the abscissas thereof each depict the number of shuttles as the number of slides when a 10 mm reciprocal slide was counted as 1. In these examples, the abrasion state of the plate surface was observed. The number of slides at the point in time when the silver plating disappeared from the sliding surface of the plate while the raw material (Cu) appeared is indicated by reverse triangles above the polygonal lines.

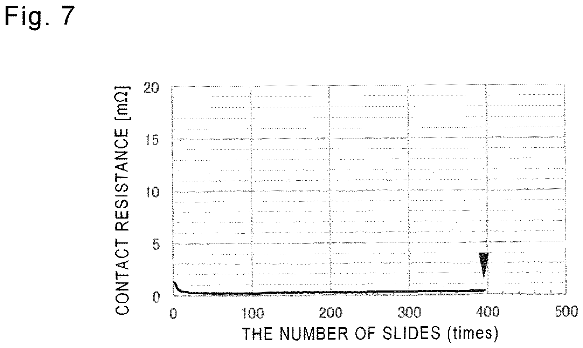

Also, changes in contact resistance of the plate surface against the number of slides are shown in Fig. 6 in the case of example 15 and in Fig. 7 in the case of example 4. In each of these examples as well, the plate and the probe were prepared three times, and their respective measurements were performed. The ordinates of these graphs each depict the contact resistance [mQ], and the abscissas and the reverse triangular symbols thereof mean the same as those in the graphs of Figs. 2 to 5.

### [Table 1]

**Table 1**

| Example | Nanocarbon material | First compound | Average life | Solvent | Dipping time |
|---|---|---|---|---|---|
| 1 | CNHs | 7-Amido-1-heptanethiol | 272 times | IPA | 2 min |
| 2 | CNHs | 7-Amido-1-heptanethiol | 396 times | IPA | 45 min |
| 3 | CNHs | 5-Carboxy-1-pentanethiol | 49 times | IPA | 2 min |
| 4 | CNHs | 5-Carboxy-1-pentanethiol | 395 times | IPA | 45 min |
| 5 | CNHs | 11-Hydroxy-1-undecanethiol | 29 times | IPA | 2 min |
| 6 | CNHs | 11 -Hydroxy-1-undecanethiol | 92 times | IPA | 45 min |
| 7 | CNHs | 10-Amido-1-decanethiol | 214 times | IPA | 45 min |
| 8 | CNT | 10-Amido-1-decanethiol | 108 times | IPA | 45 min |
| 9 | CNT | 11-Hydroxy-1-undecanethiol | 89 times | IPA | 2 min |
| 10 | CNT | 11-Hydroxy-1-undecanethiol | 209 times | IPA | 45 min |
| 11 | CNHs | 15-Carboxy-1-pentadecanethiol | 291 times | IPA | 45 min |
| 12 | CNHs | 16-Hydroxy-1-hexadecanethiol | 92 times | IPA | 45 min |
| 13 | CNHs | None | 47 times | IPA | 5 second |
| 14 | CNT | None | 25 times | IPA | 5 second |
| 15 | None | None | 16 times | None | None |

Example 15 is an example provided for comparison with the present invention, in which treatment with the treatment liquid was not performed and a plate and a probe whose surfaces were merely silver-plated were used. The average life in Table 1 represents an average value of the numbers of slides (an average value from three measurements performed in each example) when the silver plating came off from the plate surface, and is a numeric value from one test only in example 4.

As is evident, the life was extended in all of examples 1 to 14 when compared with the life in example 15 with silver plating alone. In example 15, the coefficient of friction of the plate surface basically remained around 1, as shown in Fig. 2. On the other hand, in examples 1, 3 and 4 which are embodiments of the present invention, the coefficient of friction remained at a low level on the order of 0.2 by the time when the plate surface came to the end of its life, as shown in Figs. 3 to 5, and the coefficient of friction exceeded 1 when the plate surface came to the end of its life. Thus, in these examples, it is evident that the state where the coefficient of friction is kept low can be maintained for a long period. Thus, the structure of the present invention, compared with a conventional structure, has better lubricity, and can extend a life up to the exposure of a raw material in a junction (contact part) while maintaining a low insertion force and removal force and low contact resistance.

Thus, the structure of the present invention is excellent in abrasion resistance and can keep contact resistance low for a long period.

This application claims the priority based on Japanese Patent Application No. 2020-172896 filed on October 14, 2020, the disclosure of which is incorporated herein by reference in its entirety.

### Reference Signs List

- 1: PLATE
- 2: PROBE
- S: SLIDE DIRECTION

## Claims

1. A structure having a configuration where a nanocarbon material is disposed on an at least partial surface of a metal.

2. The structure according to claim 1, wherein the nanocarbon material is at least one of a carbon nanotube, a carbon nanohorn aggregate, graphene, and fullerene.

3. The structure according to claim 2, wherein the nanocarbon material is a carbon nanohorn aggregate.

4. The structure according to any one of claims 1 to 3, wherein a coating containing the nanocarbon material and an organic compound having at least a first functional group having affinity for the metal and a second functional group having affinity for the nanocarbon material is disposed on the at least partial surface of the metal.

5. The structure according to claim 4, wherein the first functional group is a thiol group.

6. The structure according to claim 4 or 5, wherein the second functional group is an amide group, a hydroxy group or a carboxy group.

7. The structure according to claim 6, wherein the second functional group is an amide group.

8. The structure according to any one of claims 4 to 7, wherein the organic compound has at least one of a chain saturated hydrocarbon group, a chain unsaturated hydrocarbon group, a cyclic saturated hydrocarbon group and a cyclic unsaturated hydrocarbon group on a main chain backbone.

9. The structure according to claim 8, wherein the organic compound has a chain saturated hydrocarbon group on the main chain backbone.

10. The structure according to any one of claims 1 to 9, wherein the nanocarbon material is modified with a third functional group.

11. The structure according to any one of claims 1 to 10, wherein the nanocarbon material is modified with a thiol group.

12. The structure according to any one of claims 1 to 11, wherein the metal is at least one of gold, silver, and alloy thereof, and plating thereof.

13. A structure having a configuration where an at least partial surface of a metal is coated with a nanocarbon material having a functional group having affinity for the metal.

14. A structure having a configuration where a metal and a nanocarbon material are disposed via an organic compound having a first functional group having affinity for the metal and a second functional group having affinity for the nanocarbon material.

15. A sliding member having a configuration according to any one of claims 1 to 14 on at least a part of a sliding surface.

16. A connector having a configuration according to any one of claims 1 to 14 on at least a part of a sliding surface.

17. A method for producing a structure, comprising the step of coating an at least partial surface of a metal with a nanocarbon material.

18. A method for producing a structure, comprising the step of coating an at least partial surface of a metal with a material containing a nanocarbon material and an organic compound having at least a first functional group having affinity for the metal and a second functional group having affinity for the nanocarbon material.
